# EUROPÄISCHE PATENTSCHRIFT

(11) **EP 1 412 124 B1**
(45) Veröffentlichungstag und Bekanntmachung des Hinweises auf die Patenterteilung: **23.03.2005**
(21) Anmeldenummer: 02764828.6
(22) Anmeldetag: 01.08.2002
(51) Int. Cl.: B23K 9/20, B23K 11/00, B23K 37/00

(54) **KURZZEIT-LICHTBOGENSCHWEISSSYSTEM MIT EINER SICHERHEITSCHALTUNG UND VERFAHREN ZUR STEUERUNG EINES SOLCHEN**
SHORT CYCLE WELDING SYSTEM WITH A SAFETY CIRCUIT AND METHOD OF CONTROLLING SUCH A SYSTEM
SYSTEME DE SOUDAGE A L'ARC DE COURTE DUREE AVEC UN CIRCUIT DE SECURITE ET PROCEDE DE CONTROLE D'UN TEL SYSTEME

(30) Priorität: 03.08.2001 DE 10138959
(43) Veröffentlichungstag der Anmeldung: 28.04.2004
(73) Patentinhaber: Newfrey LLC, Newark, Delaware 19711 (US)
(72) Erfinder: SCHMIDT, Wolfgang, 35447 Reiskirchen (DE); SCHMITT, Klaus, Gisbert, 35390 Giessen (DE); HOFMANN, Jörg, 35396 Giessen (DE)
(74) Vertreter: Haar, Lucas H., Dipl.-Ing.
(86) Internationale Anmeldenummer: PCT/EP2002/008567
(87) Internationale Veröffentlichungsnummer: WO 2003/015974

(56) Entgegenhaltungen:
- EP-A- 0 352 576
- DE-C- 19 532 937
- PATENT ABSTRACTS OF JAPAN vol. 009, no. 124 (M-383), 29. Mai 1985 (1985-05-29) & JP 60 009585 A (TAKAO KINZOKU KOGYO KK), 18. Januar 1985 (1985-01-18)
- PATENT ABSTRACTS OF JAPAN vol. 013, no. 400 (M-867), 6. September 1989 (1989-09-06) & JP 01 143778 A (FANUC LTD), 6. Juni 1989 (1989-06-06)

## Beschreibung

Die Erfindung betrifft ein Kurzzeit-Lichtbogenschweißsystem zum Schweißen von Elementen, wie z.B. Metallbolzen, auf Bauteile, wie z.B. Metallbleche, gemäß dem Oberbegriffes des Anspruchs 1.

Die Erfindung betrifft ferner ein Verfahren zur Steuerung eines solchen Schweißsystems gemäß dem Oberbegriffes des Anspruchs 15.

Ein gattungsgemäßes Kurzzeit-Lichtbogenschweißsystem und ein gattungsgemäßes Verfahren zum Kurzzeit-Lichtbogenschweißen sind unter dem Begriff "Bolzenschweißen" allgemein bekannt, z.B. aus einem Prospekt "Die neue TUCKER-Technologie. Bolzenschweißen mit System!", veröffentlicht von "Emhart TUCKER", September 1999.

Die Technologie des Bolzenschweißens wird insbesondere, jedoch nicht ausschließlich in der Fahrzeugtechnik eingesetzt. Mit dieser Technologie können Bolzen mit oder ohne Gewinde, Muttern, Ösen und andere Elemente auf Karosseriebleche aufgeschweißt werden. Die Elemente dienen dann in der Regel als Halteanker zum Befestigen von bspw. Innenraumausstattungen an der Fahrzeugkarosserie.

Bei dem obengenannten Bolzenschweißen gemäß TUCKER wird zunächst ein Element in einen Schweißkopf eingesetzt. Dies kann durch eine automatische Zuführeinrichtung, bspw. mittels Druckluft erfolgen. Mit dem Schweißkopf wird nun das Element an der geeigneten Stelle an dem Bauteil positioniert. Als nächstes wird ein Vorschweißstrom eingeschaltet, der durch den Bolzen und das Bauteil hindurchfließt. Dann wird das Element gegenüber dem Bauteil angehoben, wodurch sich ein Lichtbogen bildet. Der Lichtbogenstrom ist so gewählt, daß zunächst Verunreinigungen, Oberflächenbeschichtungen wie Zink, Öl bzw. Trockenschmierstoffe etc. abgebrannt werden. Anschließend wird auf den Schweißstrom umgeschaltet. Durch den hohen Schweißstrom schmelzen die einander gegenüber liegenden Stirnseiten von Element und Bauteil an. Das Element wird nun wieder auf das Bauteil abgesenkt, so daß sich die wechselseitigen Schmelzen vermischen. Mit dem Erreichen des Bauelementes am Bauteil und dem Kurzschluß des Lichtbogens wird der Schweißstrom abgeschaltet. Die Schmelze erstarrt, womit die Schweißverbindung hergestellt ist.

Hierbei erfolgt das Anheben und Absenken des Elementes gegenüber dem Bauteil bei einer neueren Ausführungsform durch einen Elektromotor, insbesondere durch einen Linearmotor, der eine gesteuerte Bewegung des Elementes bewirkt.

Zur Energieversorgung und zur Steuerung des Schweißvorgangs ist gemäß dem vorerwähnten Prospekt eine Steuer- und Energieeinrichtung vorgesehen, die eine Leistungsversorgungseinrichtung zur Energieversorgung der Schweißkopfeinrichtung aufweist, sowie eine Vorschubsteuereinrichtung zur Steuerung der Zuführung von zu verschweißenden Elementen mittels der Zuführeinheit und zur Steuerung des Antriebs der Vorschubsteuereinrichtung zum Anheben und Absenken von Elementen aufweist. Die Steuer- und Energieeinrichtung umfaßt ferner eine Sicherheitsschaltung zur Überwachung der Sicherheitsfunktionen des Schweißsystems, die neben einem Betriebszustand EIN, in der ein Schweißvorgang oder eine Folge von Schweißvorgängen ermöglicht ist, zumindest einen weiteren Betriebszustand BETRIEBSUNTERBRECHUNG erlaubt, in dem die Ausgangsspannungen der Leistungsversorgungseinrichtung und der Vorschubsteuereinrichtung zumindest geblockt sind.

Dieser Zustand der BETRIEBSUNTERBRECHUNG ermöglicht nach dem Abschalten eine vereinfachte erneute Inbetriebnahme des Schweißsystems.

Von den Anwendern solcher Schweißsysteme wird eine möglichst einfache Wartung des Systems erwartet. Hierzu soll eine Fehlererkennung bzw. -behebung auf möglichst einfache Weise ermöglicht werden, wobei der laufende Fertigungsprozeß so wenig wie möglich behindert werden soll. Darüber hinaus müssen naturgemäß bei einem derartigen Schweißsystem, das mit Schweißströmen von mehreren hundert Ampere und darüber arbeitet, erhebliche Sicherheitsanforderungen eingehalten werden.

Der Erfindung liegt somit die Aufgabe zugrunde, ein verbessertes Kurzzeit-Lichtbogenschweißsystem bzw. ein verbessertes Verfahren zur Steuerung eines solchen.Systems anzugeben, das eine vereinfachte Wartung des Systems und eine vereinfachte Fehlerdiagnose ermöglicht, wobei gleichzeitig ein hoher Sicherheitsstandard eingehalten werden soll.

Diese Aufgabe wird bei einem Kurzzeit-Lichtbogenschweißsystem gemäß der eingangs genannten Art durch Mittel gelöst, die im Betriebszustand BETRIEBSUNTERBRECHUNG eine selektive Aktivierung einzelner Komponenten des Systems erlauben, wobei Mittel zur Sicherung gegen die selektive Aktivierung durch unbefugte Personen vorgesehen sind.

Die Aufgabe der Erfindung wird ferner durch ein Verfahren zur Steuerung eines Systems zum Kurzzeit-Lichtbogenschweißen von Elementen, wie z.B. Metallbolzen, auf Metallteile, wie z.B. Metallbleche, gelöst, bei dem die Elemente durch eine Schweißkopfeinrichtung unter Bewegung gegenüber dem Bauteil mittels eines Lichtbogens mit dem Bauteil verschweißt werden, mit folgenden Schritten:
- Überwachen des Systems auf einen Haltebefehl,
- Feststellen, ob der Haltebefehl ein Befehl zur BETRIEBSUNTERBRECHUNG nur zum teilweisen Stillsetzen des Systems ist,
- Falls es sich um einen Befehl zur BETRIEBSUNTERBRECHUNG handelt, Verzögern einer Leistungsversorgungseinrichtung für die Schweißkopfeinrichtung und einer Vorschubsteuereinrichtung zur Steuerung der Zuführung von Elementen und der Bewegung eines Elementes relativ zum Bauteil, und zumindest anschließendes Blockieren der Ausgangsspannungen der Leistungsversorgungseinrichtung und der Vorschubsteuereinrichtung,
- Überwachen ob ein gegen unbefugte Betätigung gesicherter Schalter ein Schaltsignal für eine Betriebsart HANDBETRIEB abgibt,
- Überwachen, ob ein Zustimmtaster ein Tastsignal abgibt,
- falls das Signal für HANDBETRIEB erhalten wird und das Tastsignal des Zustimmtasters erhalten wird, freigeben bestimmter Funktionen des Schweißsystems bei gleichzeitiger Blockierung der Ausgangsspannung der Leistungsversorgungseinrichtung.

Die Aufgabe der Erfindung wird auf diese Weise vollkommen gelöst.

Erfindungsgemäß wird nämlich nunmehr eine selektive Aktivierung einzelner Komponenten des Systems ermöglicht, wobei gleichzeitig durch die Mittel zur Sicherung gegen die selektive Aktivierung durch unbefugte Personen ein hoher Sicherheitsstandard gewährleistet ist. In jedem Falle ist auch bei selektiver Aktivierung einzelner Funktionen des Schweißsystems gewährleistet, daß die Leistungsversorgungseinrichtung keine Ausgangsspannung abgeben kann, da deren Ausgangsspannung entweder geblockt ist oder diese vom Netz getrennt ist. Auf diese Weise ist gewährleistet, daß im Falle von Wartungs- bzw. Diagnosearbeiten auf keinen Fall Schweißprozesse aktiviert werden können.

Wartungs- bzw. Diagnosearbeiten werden erheblich erleichtert, da nicht das gesamte System im abgeschalteten Zustand untersucht werden muß, sondern gezielt einzelne Funktionen des Schweißsystems geprüft werden können.

In zweckmäßiger Weiterbildung der Erfindung ist ein Hauptschalter vorgesehen, der als NOT-AUS-Schalter ausgebildet ist, bei dessen Betätigung die Steuer- und Energieeinrichtung unmittelbar von der Netzspannung abgetrennt wird und stillgesetzt wird.

Auf diese Weise kann der nach den einschlägigen Vorschriften ohnehin notwendige NOT-AUS-Schalter gleichzeitig als Hauptschalter genutzt werden, wodurch der Aufbau vereinfacht wird.

Gemäß einer weiteren Ausgestaltung der Erfindung sind im Betriebszustand BETRIEBSUNTERBRECHUNG zumindest die Ausgangsspannungen der Leistungsversorgungseinrichtung und der Vorschubsteuereinrichtung geblockt, wobei ein gegen unbefugte Benutzung gesicherter Betriebsartenwahlschalter vorgesehen ist, der mit der Sicherheitsschaltung gekoppelt ist, um im Betriebszustand BETRIEBSUNTERBRECHUNG eine selektive Aktivierung einzelner Komponenten des Systems zu ermöglichen.

Auf diese Weise wird ein hoher Sicherheitsstandard eingehalten.

In weiterer Ausgestaltung der Erfindung umfaßt die Leistungsversorgungseinrichtung eine Konstantstromquelle, deren Ausgangsspannung über eine Impuls-Blocker-Schaltung blokkierbar ist.

Auf diese Weise kann die ohnehin bei derartigen Schweißsystemen in der Regel vorhandene Impuls-Blocker-Schaltung dazu benutzt werden, um die Ausgangsspannung der Leistungsversorgungseinrichtung sicher abzublocken, sofern bei einer partiellen Betriebsunterbrechung im Falle von Wartungsarbeiten einzelne Komponenten des Schweißsystems selektiv aktiviert werden sollen. Außerdem kann die Impuls-Blocker-Schaltung zur gezielten Verzögerung des Schweißvorgangs genutzt werden, sofern der Schweißprozeß angehalten werden soll.

In zweckmäßiger Weiterbildung der Erfindung weist die Steuer- und Energieeinrichtung eine Steuereinrichtung zur Steuerung des Schweißsystems und eine Eingabeeinrichtung zur Eingabe von Bedienungsbefehlen auf.

In weiterer vorteilhafter Ausgestaltung der Erfindung ist die Schweißkopfeinrichtung mit einer externen Bedienersteuerung koppelbar, über die im Betriebszustand EIN ein Schweißvorgang aktivierbar ist.

Auf diese Weise kann die Schweißkopfeinrichtung sinnvoll in eine externe Steuerung eines Fertigungsprozesses mit eingebunden werden.

In weiterer vorteilhafter Ausgestaltung der Erfindung weist die Steuer- und Energieeinrichtung einen Kundenschnittstelle auf, die mit der externen Bedienersteuerung vorzugsweise über einen Bus koppelbar ist.

Auf diese Weise wird die Ankopplung der Steuer- und Energieeinrichtung an ein externes Steuerungssystem auf besonders einfache Weise ermöglicht.

Gemäß einer weiteren Ausführung der Erfindung erlaubt der Betriebsartenwahlschalter eine Umschaltung zwischen den Betriebsarten AUTOMATIK, in der der Schweißvorgang über die externe Bedienersteuerung im Betriebszustand EIN aktivierbar ist, und HANDBETRIEB, in der zumindest die Ausgangsspannung der Leistungsversorgungseinrichtung blockiert ist.

Hierbei ist vorzugsweise der Betriebsartenwahlschalter mit einem Zustimmtaster gekoppelt, der in der Betriebsart HANDBETRIEB bei manueller Aktivierung bei gleichzeitiger Betätigung der externen Bedienersteuerung im Zweihandbetrieb eine Aktivierung ausgewählter Funktionen des Schweißsystems erlaubt.

Durch diese Maßnahmen ist gewährleistet, daß eine Aktivierung bestimmter Funktionen des Schweißsystems nur im Zweihandbetrieb möglich ist, da der Bediener mit einer Hand den Zustimmtaster betätigen muß und mit der anderen Hand die externe Bedienersteuerung ergreifen muß, um einen Vorgang zu aktivieren. Auf diese Weise wird eine hohe Sicherheit gegen ein manuelles Berühren des Schweißkopfes oder der Zuführeinrichtung bei partieller Aufhebung der BETRIEBSUNTERBRECHUNG gewährleistet. Hierbei kann der Zustimmtaster in der Betriebsart HANDBETRIEB beispielsweise eine Zuführung von Elementen mittels der Zuführeinheit und eine Aktivierung eines Antriebes der Schweißkopfeinrichtung zum Heben und Senken von Elementen erlauben.

Dies sind die wichtigsten Diagnosearbeiten, die im Falle von Fehlern ohne Sicherheitseinbuße zugelassen werden können.

Gemäß einer weiteren Ausführung der Erfindung weist die Sicherheitsschaltung einen weiteren Betriebszustand BEDIENERSCHUTZ auf, bei dessen Aktivierung die Leistungsversorgungseinrichtung und die Vorschubsteuereinrichtung verzögert und vom Netz getrennt werden, während die Steuereinrichtung und die Eingabeeinrichtung unter Schutzkleinspannung bleiben und die Kundenschnittstelle mit Spannung versorgt wird, wobei ein manuelles Aufheben des Betriebszustandes BEDIENERSCHUTZ nach einer Zeitverzögerung wieder in den Betriebszustand EIN führt.

Durch diese Maßnahme kann die Steuer- und Energieeinrichtung im Falle eines notwendigen Anhaltens, etwa, wenn ein Bediener eine Tür der Steuer- und Energieeinrichtung öffnet, sicher stillgesetzt werden, ohne daß es zu Komplikationen bei einem laufenden Schweißprozeß kommt, wobei gleichzeitig eine vereinfachte erneute Inbetriebnahme möglich ist.

In entsprechender Weise wird vorzugsweise im Betriebszustand BETRIEBSUNTERBRECHUNG die Ausgangsspannung der Leistungsversorgungseinrichtung blockiert und die Vorschubsteuereinrichtung verzögert und vom Netz getrennt, wobei die Steuereinrichtung und die Eingabeeinrichtung unter Schutzkleinspannung bleiben und die Kundenschnittstelle mit Spannung versorgt wird, und wobei ein manuelles Aufheben des Zustandes BETRIEBSUNTERBRECHUNG sofort wieder in den Betriebszustand EIN führt.

Somit entspricht der Betriebszustand BETRIEBSUNTERBRECHUNG im wesentlichen dem Betriebszustand BEDIENERSCHUTZ, jedoch mit einer reduzierten Wirkung, da die Leistungsversorgungseinrichtung nicht vom Netz getrennt wird, sondern deren Ausgangsspannung lediglich blockiert wird, woraufhin nach einem manuellen Aufheben des Zustandes BETRIEBSUNTERBRECHUNG sofort wieder der Bereitschaftszustand erreicht wird.

In vorteilhafter Weiterbildung der Erfindung weist die Sicherheitsschaltung Anschlüsse zur Ankoppelung an ein externes Steuerungssystem, beispielsweise an die externe Bedienersteuerung zur Übertragung von Sicherheitsfunktionen auf.

Hierbei sind die Anschlüsse vorzugsweise ein- oder mehrkanalig oder als Bus in sicherer Technik ausgeführt und sind vorzugsweise für die Übertragung und Überwachung der Befehle für BETRIEBSUNTERBRECHUNG und BEDIENERSCHUTZ ausgeführt.

Auf diese Weise können Sicherheitsfunktionen mit der externen Bedienersteuerung bzw. einem externen Steuerungssystem, in das die externe Bedienersteuerung eingebunden ist, in sicherer Technik übertragen werden. Hierbei führt etwa eine externe NOT-AUS-Anforderung lediglich zum Zustand BEDIENERSCHUTZ bei der Steuer- und Energieeinrichtung.

Die Sicherheitsschaltung ist in bevorzugter Weiterbildung der Erfindung in sicherer Technik ausgeführt.

Auf diese Weise wird ein äußerst hoher Sicherheitsstandard hardwaremäßig gewährleistet.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine Darstellung eines erfindungsgemäßen Schweißsystems in äußerst vereinfachter Prinzipdarstellung;
- Fig. 2: ein Blockschaltbild der Steuer- und Energieeinrichtung eines erfindungsgemäßen Schweißsystems, und
- Fig. 3: eine Flow-Chart zur Verdeutlichung der Sicherheitsfunktionen bei den verschiedenen Betriebszuständen.

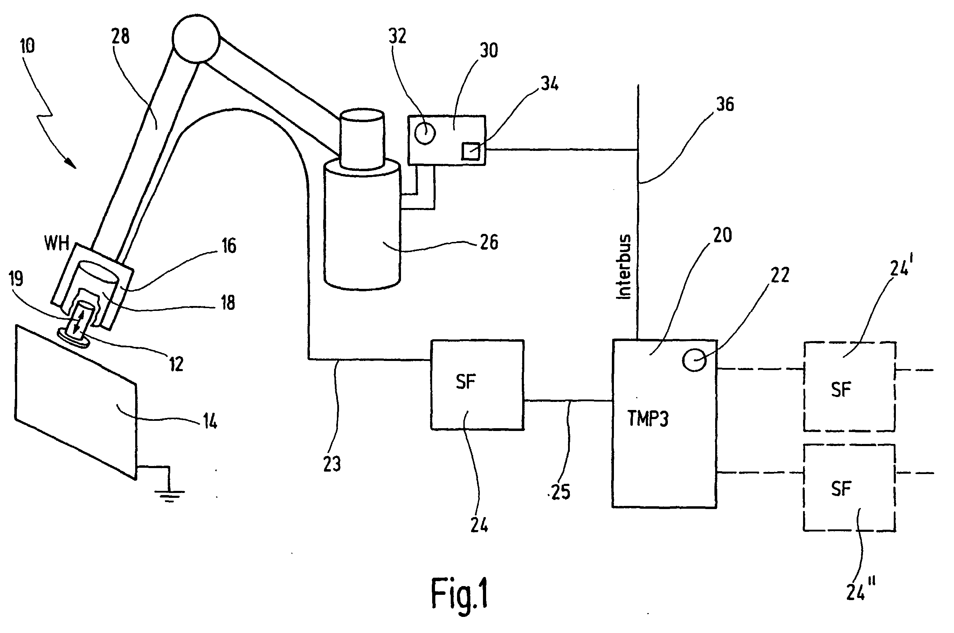

In Fig. 1 ist ein erfindungsgemäßes Schweißsystem äußerst schematisch skizziert und insgesamt mit der Ziffer 10 bezeichnet. Das Schweißsystem 10 weist eine Schweißkopfeinrichtung 16 auf, mittels derer Elemente 12, im vorliegenden Fall Bolzen, mit einem Bauteil, das schematisch mit der Ziffer 14 angedeutet ist, verschweißbar sind. Der Schweißkopf 16 kann, wie in Fig. 1 dargestellt, muß jedoch nicht, an einem Roboterarm 28 eines Roboters 26 aufgenommen sein. Die Aufnahme bei einem Roboterarm 28 ermöglicht eine automatische Positionierung des Schweißkopfes 16 in bezug auf das Bauteil 14, was insbesondere in automatisierten Fertigungsanlagen zweckmäßig ist. Zur Energieversorgung und zur Steuerung der Schweißkopfeinrichtung 16 ist eine Steuer- und Energieeinrichtung 20 vorgesehen, die auch als TMP3 bezeichnet wird. Die Steuer- und Energieeinrichtung 20 steht über eine Leitung 25 mit einer Zuführeinheit 24 in Verbindung, über die zu verschweißende Elemente 12 über eine Leitung 23 bspw. mittels Druckluft an die Schweißkopfeinrichtung 16 zugeführt werden. Es versteht sich, daß obwohl die Leitungen 25 und 23 lediglich mit einer Linie dargestellt sind, diese Leitungen Energieversorgungsleitungen, Steuerleitungen, Fluidleitungen und dergleichen mehr aufweisen können, jedoch aus Vereinfachungsgründen nur mit einer einzigen Linie dargestellt sind.

Der Roboter 26 weist eine externe Bedienersteuerung 30 auf, die Teil einer Steuerung einer automatisierten Fertigungsanlage sein kann und mit der Steuer- und Energieeinrichtung 20 gekoppelt ist, vorzugsweise über einen Industriebus 36, bspw. des Typs Interbus.

An die Steuer- und Energieeinrichtung 20 können weitere Zuführeinheiten angeschlossen sein, wie durch Ziffern 24', 24'' angedeutet ist, die wiederum mit weiteren Schweißkopfeinrichtungen gekoppelt sind (nicht dargestellt).

Die Schweißkopfeinrichtung 16 weist einen als Linearmotor ausgebildeten Antrieb auf, der in Fig. 1 lediglich schematisch mit der Ziffer 18 angedeutet ist. Mittels des Antriebes 18 wird ein Element 12, z.B. ein Bolzen, während eines Schweißvorgangs gegenüber dem Bauteil 14 angehoben und abgesenkt, wie durch den Doppelpfeil 19 angedeutet ist.

Die Steuer- und Energieeinrichtung 20 weist einen Hauptschalter 22 auf, der als NOT-AUS-Schalter ausgebildet ist und rot/gelb gekennzeichnet ist. Dieser Schalter 22 ist gemäß EN 292-2 Ziffer 6.6.66 ausgelegt und entspricht in der funktionellen Gestaltung der europäischen Norm EN 418.

Auch die externe Bedienersteuerung 30 des Roboters 26 verfügt über einen geeigneten NOT-AUS-Schalter 32.

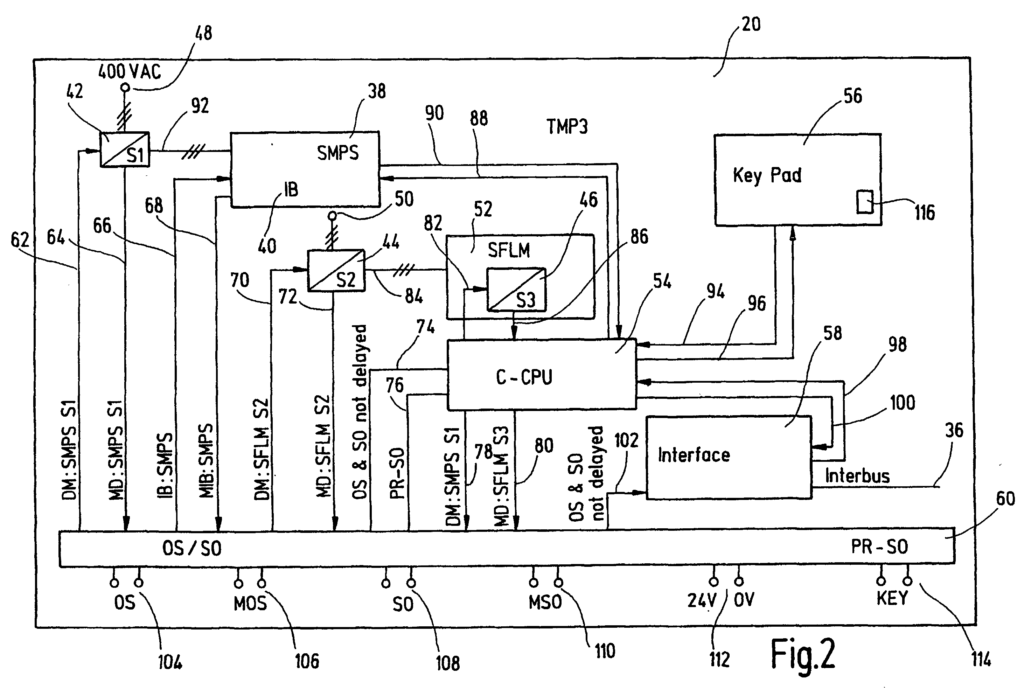

Der nähere Aufbau der Steuer- und Energieeinrichtung 20 ist aus dem Blockschaltbild gemäß Fig. 2 zu ersehen.

Die Steuer- und Energieeinrichtung 20 weist eine Leistungsversorgungseinrichtung 38 auf, die mit SMPS bezeichnet ist. Diese Leistungsversorgungseinrichtung 38 enthält eine Konstantstromquelle, die die notwendigen hohen Ströme (von bis zu 1500 Ampere) für die Schweißkopfeinrichtung 16 bereitstellen kann und deren Ausgang über eine Impuls-Blocker-Schaltung 40, die auch mit IB abgekürzt wird, blockiert werden kann.

Zur Steuerung der Zuführung von Elementen durch die Zuführeinheit 24 zur Schweißkopfeinrichtung 16 und zur Steuerung des Linearmotorantriebs 18 der Schweißkopfeinrichtung 16 ist eine Vorschubsteuereinrichtung 52 vorgesehen, die auch als SFLM abgekürzt wird.

Die Steuer- und Energieeinrichtung 20 weist ferner eine zentrale Steuereinrichtung 54 auf, die in Fig. 2 mit C-CPU bezeichnet ist. Die zentrale Steuereinrichtung 54 koordiniert und überwacht die einzelnen Komponenten der Steuer- und Energieeinrichtung 20. Zur Bedienung der Steuer- und Energieeinrichtung 20 ist eine Eingabeeinrichtung 56, die in Fig. 2 als Key Pad bezeichnet ist, über Leitungen 94, 96 an die zentrale Steuereinrichtung 54 angekoppelt. Die Steuer und Energieeinrichtung 20 weist ferner eine Kundenschnittstelle 58 auf, die in Fig. 2 als Interface bezeichnet ist, und die über Leitungen 98, 100 mit der zentralen Steuereinrichtung 54 gekoppelt ist. Die Kundenschnittstelle 58 ist an einen Bus 36 angekoppelt, bei dem es sich vorzugsweise um einen Industriebus, etwa der Art Interbus, handelt.

Die Leistungsversorgungseinrichtung 38 erhält ihre Spannung über eine mehrpolige Leitung 92 von einem Schaltschütz S1, der mit der Ziffer 42 bezeichnet ist. Der Schaltschütz S1 ist über einen Anschluß 48 an den Ausgang des Hauptschalters 22 angeschlossen, der in Fig. 2 nicht dargestellt ist. Die Vorschubsteuereinrichtung SFLM 52 wird über eine mehrpolige Leitung 84 von einem Schaltschütz S2, der mit der Ziffer 44 bezeichnet ist, mit Spannung versorgt. Der Schaltschütz S2 ist über einen Anschluß 50 gleichfalls an den Ausgang des Hauptschalters 22 angeschlossen.

Da an die Steuer- und Energieeinrichtung 20 eine Mehrzahl von Zuführeinheiten SF angeschlossen werden kann, weist jede Zuführeinheit SF zusätzlich einen Schaltschütz 46 oder S3 auf, über den die von der Vorschubsteuereinrichtung SFLM 52 erhaltene Spannungsversorgung von 24 Volt abgeschaltet werden kann. Die Vorschubsteuereinrichtung 52 steht hierzu jeweils über Leitungen 82, 86 mit der zentralen Steuereinrichtung C-CPU 54 in Verbindung.

Um die Sicherheitsfunktionen der Steuer- und Energieeinrichtung 20 vollständig überwachen und steuern zu können, ist eine Sicherheitsschaltung 60 vorgesehen, die als separater Einschub oder separate Schaltkarte ausgebildet sein kann.

Diese Sicherheitsschaltung 60 ist in sicherer Technik ausgeführt und steht mit den einzelnen Modulen der Steuer- und Energieeinrichtung 20 über Steuerleitungen und Kontrolleitungen in Verbindung, wie im folgenden noch näher erläutert wird.

Außerdem weist die Steuerschaltung 60 eine Mehrzahl von Anschlüssen zur hardwaremäßigen Überwachung und Steuerung von externen Sicherheitsfunktionen auf, wie im folgenden gleichfalls noch erläutert wird.

Im Rahmen dieser Anmeldung wird unter "sicherer Technik" eine Einstufung in die Kategorie vier gemäß der europäischen Normen EN 954 bzw. EN 60204 verstanden. Die Sicherheitsschaltung 60 dient zur Überwachung und Steuerung verschiedener Betriebszustände der Steuer- und Energieeinrichtung 20.

Ein erster Betriebszustand, der als EIN bezeichnet ist, bedeutet, daß die Steuer- und Energieeinrichtung für einen Schweißvorgang bereit ist, der über die externe Bedienersteuerung 30 über den Bus 36 aktiviert werden kann.

Ein weiterer Betriebszustand, der im folgenden als BEDIENERSCHUTZ oder OS (operator's safety) bezeichnet wird, bedeutet, daß die Leistungsversorgungseinrichtung 38 über die Impuls-Blocker-Schaltung 40 verzögert und dann über den Schaltschütz S1 vom Netz getrennt wird. Ferner wird die Vorschubsteuereinrichtung SFLM 52 verzögert und über den Schaltschütz S2 vom Netz getrennt. Dabei wird gleichzeitig die Spannungsversorgung von 24 Volt für die verschiedenen Zuführeinheiten 24 über den Schaltschütz S3 abgeschaltet. In diesem Zustand bleiben die zentrale Steuereinrichtung 54 C-CPU und die Eingabeeinrichtung 56 unter Schutzkleinspannung, während ferner die Kundenschnittstelle 58 weiterhin vom Anwender mit Strom versorgt wird. Ein selbständiges Anlaufen aus diesem Zustand ist nicht möglich. Nach Aufheben des Betriebszustand BEDIENERSCHUTZ durch ein entsprechendes Reset-Signal, das über die Eingabeeinrichtung 56 eingegeben werden kann, werden die Schaltschütze S1, S2, S3 wieder eingeschaltet und die Steuer- und Energieeinrichtung 20 geht mit einer Zeitverzögerung, die vorzugsweise in der Größenordnung von etwa 30 Sekunden liegen kann, wieder in den Betriebszustand EIN über.

Ein weiterer Betriebszustand, der im folgenden als BETRIEBSUNTERBRECHUNG oder SO ("stop operation") bezeichnet wird, entspricht dem normalen Stillsetzen des Bedienerschutzes aber mit einer reduzierten Wirkung. Hierbei wird die Leistungsversorgungseinrichtung 38 verzögert und mittels der Impulssperre 40 sicher stillgesetzt. Die Vorschubsteuereinrichtung SFLM 52 wird verzögert und über den Schaltschütz S2 vom Netz getrennt, während gleichzeitig der Schaltschütz S3 für die Spannungsversorgung der Zuführeinheiten SF ausgelöst wird. Die zentrale Steuereinrichtung C-CPU 54 und die Eingabeeinrichtung 56 bleiben unter Schutzkleinspannung, während die Kundenschnittstelle 58 weiterhin extern vom Anwender mit Spannung versorgt wird. Ein selbständiges Anlaufen aus diesem Zustand ist nicht möglich.

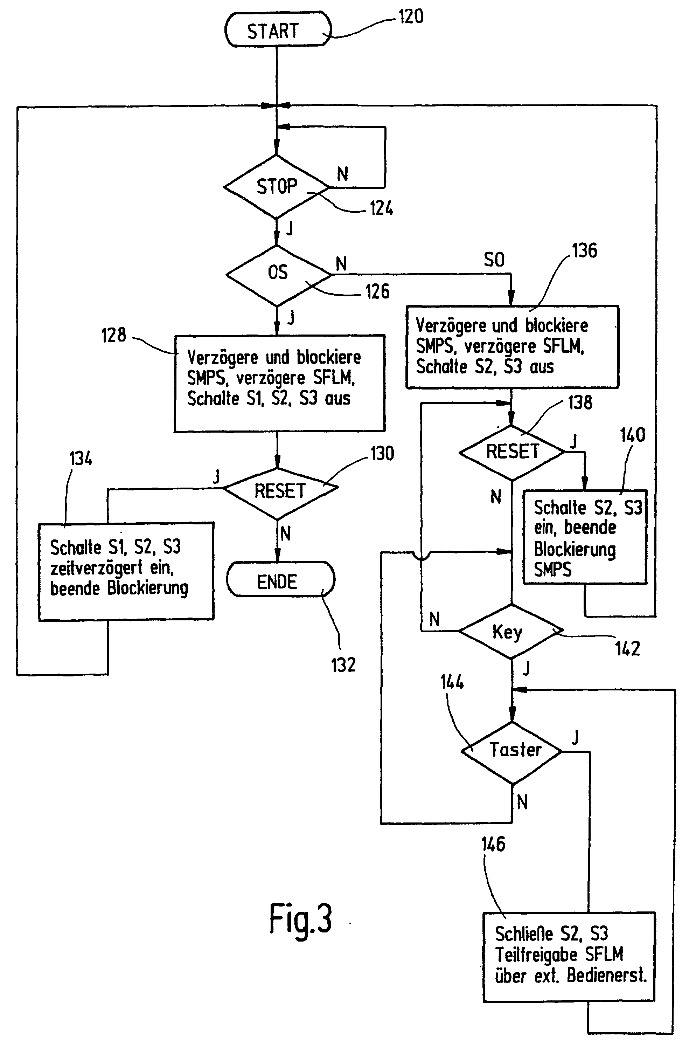

Nach Aufheben des Zustandes BETRIEBSUNTERBRECHUNG etwa über ein Reset-Signal, das über die Eingabeeinrichtung 56 eingegeben wird, werden die Schaltschütze S2, S3 wieder geschlossen und die Leistungsversorgungseinrichtung 38 über die Impuls-Blocker-Schaltung 40 wieder freigegeben, so daß die Steuer- und Energieeinrichtung wieder betriebsbereit im Zustand EIN ist. Darüber hinaus besteht die Möglichkeit, den Zustand BETRIEBSUNTERBRECHUNG partiell wieder aufzuheben, wie in Fig. 2 durch die Angabe PR-SO ("partial reset"-"stop operation") angedeutet ist. Hierzu muß ein gegen unbefugte Benutzung gesicherter Betriebsartenwahlschalter 116, der als Schlüsselschalter ausgebildet sein kann, betätigt werden. Über einen Zustimmtaster 34, der sich gemäß Fig. 1 etwa an einer externen Bedienersteuerung 30 befinden kann, können dann bestimmte Funktionen des Schweißsystems für Wartungsund Diagnosezwecke aktiviert werden, wie im folgenden noch näher anhand von Fig. 3 erläutert wird.

Die Sicherheitsschaltung 60 steht über eine Steuerleitung 62 mit dem Schaltschütz S1 in Verbindung, über die eine Trennung des Schaltschützes S1 bewirkt werden kann, was über die Angabe DM:SMPS S1 angedeutet ist, wobei DM als Abkürzung für "disconnect from mains" verwendet wird. Über eine Leitung 64 überwacht die Sicherheitsschaltung 60, ob ein über die Leitung 62 ausgegebener Befehl zum Auslösen des Schaltschützes S1 auch ausgeführt wurde, was durch die Angabe MD:SMPS S1 angedeutet ist, wobei die Angabe "MD" für die Überwachung des Trennvorganges steht ("monitor disconnection").

Die Sicherheitsschaltung 60 kann über eine Leitung 66 die Impuls-Blocker-Schaltung 40 aktivieren, um die Leistungsversorgungseinrichtung SMPS 38 zu verzögern bzw. die Ausgangsspannung vollständig zu blockieren, was durch die Angabe IB:SMPS verdeutlicht ist. Über die Leitung 68 wird die Blokkierung durch die Impuls-Blocker-Schaltung 40 überwacht (MIB:SMPS).

Der Schaltschütz S2 kann von der Sicherheitsschaltung 60 über eine Leitung 70 ausgelöst werden, was durch die Angabe DM:SFLM S2 verdeutlicht ist. Über eine Leitung 72 wird die Trennung des Schaltschützes von der Sicherheitsschaltung 60 überwacht (MD:SFLM S2).

Die Leistungsversorgungseinrichtung SMPS kommuniziert mit der zentralen Steuereinrichtung C-CPU über zwei Leitungen 88, 90. Die zentrale Steuereinrichtung C-CPU kommuniziert mit der Vorschubsteuereinrichtung SFLM über zwei Leitungen 82, 86.

Die Sicherheitsschaltung 60 sendet ferner an die zentrale Steuereinrichtung C-CPU über eine Leitung 74 ein nicht verzögertes Steuersignal, falls die Zustände BEDIENERSCHUTZ und BETRIEBSUNTERBRECHUNG aktiviert worden sind (OS & SO not delayed), um die Annahme weiterer Steuersignale zu blockieren und bereits begonnene Schweißprozesse definiert zu Ende zu führen. Die Sicherheitsschaltung 60 gibt ferner über eine Leitung 76 ein Steuersignal an die zentrale Steuereinrichtung C-CPU aus, falls eine teilweise Aufhebung der Betriebsunterbrechung im Zustand BETRIEBSUNTERBRECHUNG erfolgen soll (PR-SO).

Einen Befehl zur Trennung von S1 kann die zentrale Steuereinrichtung C-CPU über eine Leitung 78 an die Sicherheitsschaltung 60 senden (DM:SMPS S1), um bei zu hohen Spannungen im Schweißkreis SMPS 38 sofort zu blockieren und sofort vom Netz zu trennen. Ferner erhält die Sicherheitsschaltung 60 über eine Leitung 80 eine Rückmeldung darüber, ob der Schaltschütz S3 getrennt wurde (MD:SFLM S3).

Eine unverzögerte Mitteilung, daß die Betriebszustände BEDIENERSCHUTZ oder BETRIEBSUNTERBRECHUNG aktiviert worden sind, gibt die Sicherheitsschaltung 60 ferner über eine Leitung 102 an die Kundenschnittstelle 58 weiter.

Die Sicherheitsschaltung 60 kann ferner über vier zweikanalige Anschlüsse 104, 106, 108, 110 mit der externen Bedienersteuerung 30 bzw. mit einer externen Fertigungssteuerung hardwaremäßig gekoppelt werden, um Befehle und Rückmeldungen über die Zustände BEDIENERSCHUTZ OS und BETRIEBSUNTERBRECHUNG SO austauschen zu können. Eine externe Anforderung für ein unverzügliches Stillsetzen des Schweißsystems 10 an den Eingängen 104, die etwa von einem NOT-AUS-Schalter 32 der externen Bedienersteuerung 30 erfolgen kann, führt zu keiner vollständigen Abschaltung der Steuer- und Energieeinrichtung TMP3, sondern lediglich zur sofortigen Anforderung des Betriebszustandes BEDIENERSCHUTZ OS. Auf diese Weise kann die Steuer- und Energieeinrichtung 20 bei Erhalt eines externen NOT-AUS-Signals verzögert und definiert stillgesetzt werden, so daß anschließend ein schnelles erneutes Anfahren der Steuer- und Energieeinrichtung 20 möglich ist. Eine korrekte Ausführung des externen Befehls für den Betriebszustand BEDIENERSCHUTZ wird von der Sicherheitsschaltung 60 über die beiden Anschlüsse MOS 106 ausgegeben.

In entsprechender Weise kann ein externer Befehl zum Erreichen des Betriebszustandes BETRIEBSUNTERBRECHUNG SO über die beiden Anschlüsse 108 an die Sicherheitsschaltung 60 weitergegeben werden, die die korrekte Ausführung über die beiden Anschlüsse MSO 110 meldet.

Die Sicherheitsschaltung 60 erhält ferner noch zwei Anschlüsse 112 zum Anschluß einer Betriebsspannung von 24 Volt, sowie zwei Anschlüsse 114 zum Anschluß des Betriebsartenwahlschalters 116, der bspw. in die Eingabeeinrichtung 56 integriert sein kann oder an anderer Stelle vorgesehen sein kann.

Der Betriebsartenwahlschalter 116 ist bspw. als Schlüsselschalter ausgebildet und erlaubt eine Umschaltung zwischen den Betriebsarten AUTOMATIK- und HANDBETRIEB. Durch den Betriebsartenwahlschalter 116 wird der zentralen Steuereinrichtung C-CPU 54 mitgeteilt, daß der Zustand BETRIEBSUNTERBRECHUNG partiell aufgehoben wird und daß bei gleichzeitiger Betätigung des Zustimmtasters 34, der bspw. in die externe Bedienersteuerung 30 des Roboters 26 integriert sein kann, bestimmte Funktionen während der Betätigung des Zustimmtasters erlaubt sind.

Im folgenden werden anhand von Fig. 3 die verschiedenen Stopp-Funktionen und die partielle Aufhebung des Zustandes BETRIEBSUNTERBRECHUNG näher erläutert.

Ausgehend vom Zustand EIN am Startfenster 120 überwacht das System, ob ein Stoppbefehl 124 ausgegeben wird. Falls dies der Fall ist, wird ferner überwacht, ob es sich um einen Befehl zum vollständigen Stillsetzen, d.h. für BEDIENERSCHUTZ, handelt oder nicht, wie durch Ziffer 126 angedeutet ist. Im Falle der Anforderung des Zustandes BEDIENERSCHUTZ wird die Leistungsversorgungseinrichtung SMPS verzögert, über die Impuls-Blocker-Schaltung IB geblockt und durch S1 vom Netz getrennt. Ferner wird die Vorschubsteuereinrichtung SFLM verzögert und die Schaltschütze S2, S3 ausgelöst, wie durch den Block 128 angedeutet ist. Ein selbständiges Anlaufen ist in diesem Zustand nicht möglich. Nunmehr wird überwacht, ob der BEDIENERSCHUTZ aufgehoben werden soll, wie durch die Abfrage 130, ob ein Reset-Signal erhalten wird oder nicht, angedeutet ist. Erfolgt kein Reset-Signal, so ist hiermit das Ende 132 erreicht. Im Falle eines Reset-Signals werden die Schaltschütze S1, S2, S3 eingeschaltet und die Impulsblockade aufgehoben. Das System ist nach Zeitverzögerung wieder betriebsbereit, wie durch den Block 134 angedeutet ist.

Wird an der Verzweigung 126 festgestellt, daß der Stoppbefehl keine Anforderung für BEDIENERSCHUTZ OS ist, so handelt es sich um eine Anforderung für BETRIEBSUNTERBRECHUNG SO. In diesem Fall wird, wie durch den Block 136 angedeutet ist, SMPS über die Impuls-Blocker-Schaltung IB verzögert und sicher stillgesetzt. Gleichzeitig wird SFLM verzögert und über S2, S3 vom Netz getrennt.

Aus diesem Zustand ist kein selbständiges Wiederanlaufen möglich. Im Falle eines Reset-Befehls 138, der bspw. über die Eingabeeinrichtung 56 eingegeben werden kann, werden die Schaltschütz S2, S3 wieder mechanisch geschlossen und die Blockierung der Leistungsversorgungseinrichtung 38 SMPS aufgehoben, so daß das System wieder betriebsbereit im Zustand EIN ist. Erfolgt kein Reset-Befehl, so wird ferner bei 142 überwacht, ob der Betriebsartenwahlschalter 116 betätigt wurde, um die Betriebsart HANDBETRIEB einzustellen. Falls dies der Fall ist, wird ferner bei 144 überwacht, ob der Zustimmtaster 34 dauernd betätigt wird. Falls dies der Fall ist, so werden S2, S3 wieder geschlossen und es erfolgt eine Teilfreigabe für die Vorschubsteuereinrichtung SFLM, wie durch den Block 146 angedeutet ist. Im Falle dieser Teilfreigabe können über die externe Bedienersteuerung die Funktionen Antrieb (Schlitten) vor/rück und Elemente (Bolzen) zuführen über die externe Bedienersteuerung 30 ausgeführt werden, die via Bus 36 über die Kundenschnittstelle 58 übertragen werden. Wegen der notwendigen gleichzeitigen Betätigung des Zustimmtasters 34 und der externen Bedienersteuerung 30 ist dies nur im Zweihandbetrieb möglich, so daß ein ausreichender Unfallschutz für den Bediener besteht. In diesem Zustand bleibt auf jeden Fall die Leistungsversorgungseinrichtung 38 über die Impuls-Blocker-Schaltung IB 40 sicher blockiert, so daß keine Schweißprozesse aktiviert werden können.

Wird der Betriebsartenwahlschalter 116 wieder auf AUTOMATIK zurückgestellt, so kann der Zustand Betriebsunterbrechung wieder über ein Reset-Signal beendet werden, vgl. 138, 140.

Darüber hinaus kann zusätzlich ein weiterer Betriebszustand WERKSTATT vorgesehen sein, der jedoch rein softwaremäßig ausgeführt ist und nicht in sicherer Technik ausgeführt ist. Die Funktion WERKSTATT ist bis auf den NOT-AUS-Schalter nicht in das Sicherheitskonzept der Steuer- und Energieeinrichtung 20 eingebunden. Die Funktion WERKSTATT darf nur von für diese Funktion speziell ausgebildeten Personen in für diese Funktion gesondert ausgewiesenen Bereichen ausgeführt werden.

In diesem Betriebszustand können verschiedene Wartungs- bzw. Diagnosefunktionen über ein an eine Zuführeinheit SF angeschlossenes Bediengerät ausgeführt werden.

Auch der Zustimmtaster 34 und die Vorschubsteuereinrichtung SFLM 52 sind basierend auf der Risikoabschätzung S1F1P2 für partiell aufgehobene Betriebsunterbrechung in sicherer Technik gemäß Kategorie vier ausgeführt.

## Patentansprüche

1. Kurzzeit-Lichtbogenschweißsystem zum Schweißen von Elementen (12), wie z.B. Metallbolzen, auf Bauteile (14), wie z.B. Metallbleche, mit
- einer Schweißkopfeinrichtung (16), die Mittel (18) zum Bewegen eines Elementes (12) in bezug auf ein Bauteil (14) aufweist,
- einer Zuführeinheit (24) zur Zuführung von zu verschweißenden Elementen (12) an das Bauteil (14) und
- einer Steuer- und Energieeinrichtung (20), mit
- einer Leistungsversorgungseinrichtung (38) zur Energieversorgung der Schweißkopfeinrichtung (16),
- einer Vorschubsteuereinrichtung (52) zur Steuerung der Zuführung von Elementen (12) und der Bewegung eines Elementes (12) relativ zum Bauteil (14),
- einer Sicherheitsschaltung (60) zur Überwachung der Sicherheitsfunktionen des Schweißsystems (10), die neben einem Betriebszustand EIN, in der ein Schweißvorgang oder eine Folge von Schweißvorgängen ermöglicht ist, zumindest einen weiteren Betriebszustand BETRIEBSUNTERBRECHUNG erlaubt, in dem die Ausgangsspannungen der Leistungsversorgungseinrichtung (38) und der Vorschubsteuereinrichtung (52) zumindest geblockt sind,
**gekennzeichnet durch** Mittel (34, 116), die im Betriebszustand BETRIEBSUNTERBRECHUNG eine selektive Aktivierung einzelner Komponenten des Systems erlauben, während die Ausgangsspannung der Leistungsversorgungseinrichtung zumindest geblockt wird und wobei Mittel (116) zur Sicherung gegen die selektive Aktivierung **durch** unbefugte Personen vorgesehen sind.

2. Schweißsystem nach Anspruch 1, **dadurch gekennzeichnet, daß** im Betriebszustand BETRIEBSUNTERBRECHUNG zumindest die Ausgangsspannungen der Leistungsversorgungseinrichtung (38) und der Vorschubsteuereinrichtung (52) geblockt sind, und daß ein gegen unbefugte Benutzung gesicherter Betriebsartenwahlschalter (116) vorgesehen ist, der mit der Sicherheitsschaltung (60) gekoppelt ist, um im Betriebszustand BETRIEBSUNTERBRECHUNG eine selektive Aktivierung einzelner Komponenten des Systems zu ermöglichen.

3. Schweißsystem nach Anspruch 1 oder 2, **dadurch gekennzeichnet, daß** die Leistungsversorgungseinrichtung (38) eine Konstantstromquelle umfaßt, deren Ausgangsspannung über eine Impuls-Blocker-Schaltung (40) blockierbar ist.

4. Schweißsystem nach einem der vorhergehenden Ansprüche, **dadurch gekennzeichnet, daß** die Steuer- und Energieeinrichtung (20) eine Steuereinrichtung (54) zur Steuerung des Schweißsystems (10) und eine Eingabeeinrichtung (56) zur Eingabe von Bedienungsbefehlen aufweist.

5. Schweißsystem nach einem der vorhergehenden Ansprüche, **dadurch gekennzeichnet, daß** die Schweißkopfeinrichtung (16) mit einer externen Bedienersteuerung (30) koppelbar ist, über die im Betriebszustand EIN ein Schweißvorgang aktivierbar ist.

6. Schweißsystem nach einem der vorhergehenden Ansprüche, **dadurch gekennzeichnet, daß** die Steuer- und Energieeinrichtung (20) eine Kundenschnittstelle (58) aufweist, die mit der externen Bedienersteuerung (30) vorzugsweise über einen Bus (36) koppelbar ist.

7. Schweißsystem nach Anspruch 6, **dadurch gekennzeichnet, daß** der Betriebsartenwahlschalter (116) eine Umschaltung zwischen den Betriebsarten AUTOMATIK, in der Schweißvorgänge über die externe Bedienersteuerung (30) im Betriebszustand EIN aktivierbar sind, und HANDBETRIEB erlaubt, in der zumindest die Ausgangsspannung der Leistungsversorgungseinrichtung (38) blockiert ist.

8. Schweißsystem nach Anspruch 7, **gekennzeichnet durch** einen Zustimmtaster (34), der in der Betriebsart HANDBETRIEB bei manueller Aktivierung und gleichzeitiger Betätigung der externen Bedienersteuerung (30) im Zweihandbetrieb eine Aktivierung ausgewählter Funktionen des Schweißsystems (10) erlaubt.

9. Schweißsystem nach Anspruch 8, **dadurch gekennzeichnet, daß** der Zustimmtaster (34) in der Betriebsart HANDBETRIEB eine Zuführung von Elementen (12) mittels der Zuführeinheit (24) und eine Aktivierung eines Antriebes (18) der Schweißkopfeinrichtung zum Heben und Senken von Elementen (12) erlaubt.

10. Schweißsystem nach einem der Ansprüche 4 bis 9, **dadurch gekennzeichnet, daß** die Sicherheitsschaltung (60) einen weiteren Betriebszustand BEDIENERSCHUTZ aufweist, bei dessen Aktivierung die Leistungsversorgungseinrichtung (38) und die Vorschubsteuereinrichtung (52) verzögert und definiert vom Netz getrennt werden, während die Steuereinrichtung (54) und die Eingabeeinrichtung (56) unter Schutzkleinspannung bleiben und die Kundenschnittstelle (58) mit Spannung versorgt wird, und wobei ein manuelles Aufheben des Betriebszustandes BEDIENERSCHUTZ nach einer Zeitverzögerung wieder in den Betriebszustand EIN führt.

11. Schweißsystem nach einem der Ansprüche 4 bis 10, **dadurch gekennzeichnet, daß** im Betriebszustand BETRIEBSUNTERBRECHUNG die Ausgangsspannung der Leistungsversorgungseinrichtung (38) blockiert wird und die Vorschubsteuereinrichtung (52) verzögert und definiert vom Netz getrennt wird, wobei die Steuereinrichtung (54) und die Eingabeeinrichtung (56) unter Schutzkleinspannung bleiben und die Kundenschnittstelle (58) mit Spannung versorgt werden, und wobei ein manuelles Aufheben des Zustandes BETRIEBSUNTERBRECHUNG sofort wieder in den Betriebszustand EIN führt.

12. Schweißsystem nach Anspruch 10 oder 11, **dadurch gekennzeichnet, daß** die Sicherheitsschaltung (60) Anschlüsse (104, 106, 108, 110) zur Ankoppelung an ein externes Steuerungssystem, beispielsweise an die externe Bedienersteuerung (30), aufweist.

13. Schweißsystem nach Anspruch 12, **dadurch gekennzeichnet, daß** die Anschlüsse (104, 106, 108, 110) in sicherer Technik ausgeführt sind und vorzugsweise für die Übertragung und Überwachung der Befehle für BETRIEBSUNTERBRECHUNG und BEDIENERSCHUTZ ausgelegt sind.

14. Schweißsystem nach einem der vorhergehenden Ansprüche, **dadurch gekennzeichnet, daß** die Sicherheitsschaltung (60) in sicherer Technik ausgeführt ist.

15. Verfahren zur Steuerung eines Systems (10) zum Kurzzeit-Lichtbogenschweißen von Elementen (12), wie z.B. Metallbolzen, auf Bauteile (14), wie z.B. Metallbleche, bei dem die Elemente durch eine Schweißkopfeinrichtung (16) unter Bewegung gegenüber dem Bauteil (14) mittels eines Lichtbogens mit dem Bauteil (14) verschweißt werden, kenngezeichnet durch die folgenden Schritten:
- Überwachen des Systems (10) auf einen Haltebefehl (124),
- Feststellen (126), ob der Haltebefehl (124) ein Befehl zur BETRIEBSUNTERBRECHUNG nur zum teilweisen Stillsetzen des Systems (10) ist,
- Falls es sich um einen Befehl zur BETRIEBSUNTERBRECHUNG handelt, Verzögern (136) einer Leistungsversorgungseinrichtung (38) für die Schweißkopfeinrichtung (16) und einer Vorschubsteuereinrichtung (52) zur Steuerung der Zuführung von Elementen (12) und der Bewegung eines Elementes (12) relativ zum Bauteil (14), und zumindest anschließendes Blockieren der Ausgangsspannungen der Leistungsversorgungseinrichtung (38) und der Vorschubsteuereinrichtung (52),
- Überwachen (142) ob ein gegen unbefugte Betätigung gesicherter Schalter (116) ein Schaltsignal für eine Betriebsart HANDBETRIEB abgibt,
- Überwachen, ob ein Zustimmtaster (34) ein Tastsignal abgibt,
- Falls das Signal für HANDBETRIEB erhalten wird und das Tastsignal des Zustimmtasters (34) erhalten wird, Freigeben bestimmter Funktionen des Schweißsystems (10) bei gleichzeitiger Blockierung der Ausgangsspannung der Leistungsversorgungseinrichtung (38).

## Claims

1. Short-time arc welding system for welding elements (12), such as for example metal studs, on to components (14), such as for example metal sheets, with
- a welding head device (16) which has means (18) to move an element (12) in relation to a component (14),
- a feed unit (24) to feed to the component (14) elements (12) for welding, and
- a control and energy device (20), with
- a power supply device (38) for supplying power to the welding head device (16),
- a feed control device (52) for controlling the feeding of elements (12) and the movement of an element (12) relative to the component (14),
- a safety circuit (60) for monitoring the safety functions of the welding system (10), which safety circuit (60), in addition to an operating state ON
in which a welding operation or a series of welding operations is rendered possible, permits at least one further operating state STOP OPERATION, in which the output voltages of the power supply device (38) and of the feed control device (52) are at least blocked,
**characterised in that** means (34, 116), which in the operating state STOP OPERATION, permit selective activation of individual components of the system, while the output voltage of the power supply device is at least blocked and wherein means (116) are provided for securing from selective activation by unauthorised persons.

2. Welding system according to claim 1, **characterised in that** in the operating state STOP OPERATION at least the output voltages of the power supply device (38) and of the feed control device (52) are blocked, and **in that** an operating mode selector (116) secured from unauthorised use is provided, which is coupled to the safety circuit (60), in order in the operating state STOP OPERATION to render possible a selective activation of individual components of the system.

3. Welding system according to claim 1 or 2, **characterised in that** the power supply device (38) encompasses a constant-current source the output voltage of which can be blocked via a pulse blocker circuit (40).

4. Welding system according to any one of the preceding claims, **characterised in that** the control and energy device (20) comprises a control device (54) for controlling the welding system (10) and an input device (56) for inputting operating commands.

5. Welding system according to any one of the preceding claims, **characterised in that** the welding head device (16) can be coupled to an external operator control (30) via which control a welding operation can be activated in the operating state ON.

6. Welding system according to any one of the preceding claims, **characterised in that** the control and energy device (20) comprises a customer interface (58) which can be coupled to the external operator control (30) preferably via a bus (36).

7. Welding system according to claim 6, **characterised in that** the operating mode selector (116) permits switching between the operating modes AUTOMATIC in which welding operations can be activated via the external operator control (30) in the operating state ON, and MANUAL OPERATION in which at least the output voltage of the power supply device (38) is blocked.

8. Welding system according to claim 7, **characterised by** a permission sensor (34) which in the operating mode MANUAL OPERATION in the case of manual activation and simultaneous actuation of the external operator control (30) in two-hand operation permits activation of selected functions of the welding system (10).

9. Welding system according to claim 8, **characterised in that** the permission sensor (34) in the operating mode MANUAL OPERATION permits a feeding of elements (12) by means of the feed unit (24) and activation of a drive (18) of the welding head device for raising and lowering elements (12).

10. Welding system according to any one of claims 4 to 9, **characterised in that** the safety circuit (60) has a further operating state OPERATOR'S SAFETY on activation of which the power supply device (38) and the feed control device (52) are delayed and disconnected from the mains supply in a defined manner, while the control device (54) and the input device (56) remain on protective low voltage and the customer interface (58) is supplied with voltage, and whereby a manual cancellation of the operating state OPERATOR'S SAFETY is leading to resumption of the operating state ON after a time delay.

11. Welding system according to any one of claims 4 to 10, **characterised in that** in the operating state STOP OPERATION the output voltage of the power supply device (38) is blocked and the feed control device (52) is delayed and disconnected in a defined manner from the mains, the control device (54) and the input device (56) remaining on protective low voltage and the customer interface (58) are supplied with voltage, and whereby a manual cancellation of the state STOP OPERATION immediately leading to resumption of the operating state ON.

12. Welding system according to claim 10 or 11, **characterised in that** the safety circuit (60) has connections (104, 106, 108, 110) for coupling to an external control system, for example to the external operator control (30).

13. Welding system according to claim 12, **characterised in that** the connections (104, 106, 108, 110) are designed with safe technology and preferably are designed for the transmission and monitoring of the commands for STOP OPERATION and OPERATOR'S SAFETY

14. Welding system according to any one of the preceding claims, **characterised in that** the safety circuit (60) is designed with safe technology.

15. Process for controlling a system (10) of short-time arc welding elements (12), such as for example metal studs, on to components (14), such as for example metal sheets, wherein the elements are welded to the component (14) by a welding head device (16) being moved in relation to the component (14) by means of an arc, **characterised by** the following steps:
- monitoring the system (10) for a stop command (124),
- determining (126) whether the stop command (124) is a command for STOP OPERATION only to partially shut down the system (10),
- if the stop command is a command for STOP OPERATION, delaying (136) a power supply device (38) for the welding head device (16) and a feed control device (52) for controlling the feeding of elements (12) and controlling the movement of an element (12) relative to the component (14), and at least subsequently blocking the output voltages of the power supply device (38) and of the feed control device (52),
- monitoring (142) whether a switch (116) secured from unauthorised actuation emits a switching signal for an operating mode MANUAL OPERATION,
- monitoring whether a permission sensor (34) emits a sampling signal,
- if the signal for MANUAL OPERATION is received and the sampling signal of the permission sensor (34) is received, enabling certain functions of the welding system (10) with simultaneous blocking of the output voltage of the power supply device (38).

## Revendications

1. Système de soudage à l'arc de courte durée pour souder des éléments (12), comme par exemple des goujons métalliques, sur des éléments de construction (14), comme par exemple des tôles métalliques, comprenant :
- un dispositif de tête de soudage (16) qui présente des moyens (18) pour déplacer un élément (12) par rapport à un élément de construction (14),
- une unité d'amenée (24) pour amener des éléments (12) à souder jusqu'à l'élément de construction (14), et
- un dispositif de commande et d'alimentation en énergie (20), comprenant :
- un dispositif d'alimentation en puissance (38) pour alimenter en énergie le dispositif de tête de soudage (16),
- un dispositif de commande d'avance (52) pour commander l'amenée d'éléments (12) et le déplacement d'un élément (12) par rapport à l'élément de construction (14),
- un circuit de sécurité (60) pour surveiller les fonctions de sécurité du système de soudage (10), qui permet en plus d'un état de fonctionnement MARCHE, dans lequel une opération de soudage ou une séquence d'opérations de soudage est possible, au moins un autre état de fonctionnement ARRET DE MARCHE, dans lequel les tensions de sortie du dispositif d'alimentation en puissance (38) et du dispositif de commande d'avance (52) sont au moins bloquées,
**caractérisé par** des moyens (34, 116) qui permettent à l'état de fonctionnement ARRET DE MARCHE une activation sélective de composants individuels du système, tandis que la tension de sortie du dispositif d'alimentation en puissance est au moins bloquée, et dans lequel des moyens (116) de protection contre l'activation sélective par des personnes non autorisées sont prévus.

2. Système de soudage selon la revendication 1, **caractérisé en ce que** à l'état de fonctionnement ARRET DE MARCHE, au moins les tensions de sortie du dispositif d'alimentation en puissance (38) et du dispositif de commande d'avance (52) sont bloquées, et **en ce qu'**un sélecteur de modes de fonctionnement (116) protégé contre une utilisation non autorisée est prévu qui est couplé avec le circuit de sécurité (60) pour permettre à l'état de fonctionnement ARRET DE MARCHE une activation sélective de composants individuels du système.

3. Système de soudage selon la revendication 1 ou 2, **caractérisé en ce que** le dispositif d'alimentation en puissance (38) comprend une source de courant constant dont la tension de sortie peut être bloquée par l'intermédiaire d'un circuit de blocage d'impulsion (40).

4. Système de soudage selon l'une quelconque des revendications précédentes, **caractérisé en ce que** le dispositif de commande et d'alimentation en énergie (20) présente un dispositif de commande (54) pour commander le système de soudage (10) et un dispositif d'entrée (56) pour entrer des instructions de service.

5. Système de soudage selon l'une quelconque des revendications précédentes, **caractérisé en ce que** le dispositif de tête de soudage (16) peut être couplé avec une commande utilisateur externe (30) qui permet d'activer une opération de soudage à l'état de fonctionnement MARCHE.

6. Système de soudage selon l'une quelconque des revendications précédentes, **caractérisé en ce que** le dispositif de commande et d'énergie (20) présente une interface client (58) qui peut être couplée avec la commande utilisateur externe (30) de préférence par l'intermédiaire d'un bus (36).

7. Système de soudage selon la revendication 6, **caractérisé en ce que** le sélecteur de modes de fonctionnement (116) permet une commutation entre les modes de fonctionnement COMMANDE AUTOMATIQUE, dans lequel il est possible d'activer des opérations de soudage par l'intermédiaire de la commande utilisateur externe (30) à l'état de fonctionnement MARCHE, et COMMANDE MANUELLE, dans lequel au moins la tension de sortie du dispositif d'alimentation en puissance (38) est bloquée.

8. Système de soudage selon la revendication 7, **caractérisé par** un bouton-poussoir d'autorisation (34) qui permet une activation de fonctions sélectionnées du système de soudage (10) dans le mode de fonctionnement COMMANDE MANUELLE en cas d'activation manuelle et d'actionnement simultané de la commande utilisateur externe (30) en fonctionnement bimanuel.

9. Système de soudage selon la revendication 8, **caractérisé en ce que** le bouton-poussoir d'autorisation (34) permet dans le mode de fonctionnement COMMANDE MANUELLE d'amener des éléments (12) au moyen de l'unité d'amenée (24) et d'activer un entraînement (18) du dispositif de tête de soudage pour monter et descendre des éléments (12).

10. Système de soudage selon l'une quelconque des revendications 4 à 9, **caractérisé en ce que** le circuit de sécurité (60) présente un autre état de fonctionnement PROTECTION UTILISATEUR, à l'activation duquel le dispositif d'alimentation en puissance (38) et le dispositif de commande d'avance (52) sont temporisés et séparés du secteur de façon déterminée, tandis que le dispositif de commande (54) et le dispositif d'entrée (56) restent sous une basse tension de protection et l'interface client (58) est alimentée en tension, et dans lequel une annulation manuelle de l'état de fonctionnement PROTECTION UTILISATEUR après une temporisation revient à l'état de fonctionnement MARCHE.

11. Système de soudage selon l'une quelconque des revendications 4 à 10, **caractérisé en ce qu'**à l'état de fonctionnement ARRET DE MARCHE, la tension de sortie du dispositif d'alimentation en puissance (38) est bloquée et le dispositif de commande d'avance (52) est temporisé et séparé du secteur de façon déterminée, dans lequel le dispositif de commande (54) et le dispositif d'entrée (56) restent sous une basse tension de protection et l'interface client (58) est alimentée en tension, et dans lequel une annulation manuelle de l'état ARRET DE MARCHE revient immédiatement à l'état de fonctionnement MARCHE.

12. Système de soudage selon la revendication 10 ou 11, **caractérisé en ce que** le circuit de protection (60) présente des connexions (104, 106, 108, 110) pour un couplage avec un système de commande externe, par exemple la commande utilisateur externe (30).

13. Système de soudage selon la revendication 12, **caractérisé en ce que** les connexions (104, 106, 108, 110) sont réalisées selon une technique à sécurité intrinsèque et de préférence conçues pour la transmission et la surveillance des instructions pour ARRET DE MARCHE et PROTECTION UTILISATEUR.

14. Système de soudage selon l'une quelconque des revendications précédentes, **caractérisé en ce que** le circuit de protection (60) est réalisé selon une technique à sécurité intrinsèque.

15. Procédé de commande d'un système (10) pour le soudage à l'arc de courte durée d'éléments (12), comme par exemple des goujons métalliques, sur des éléments de construction (14), comme par exemple des tôles métalliques, dans lequel les éléments sont soudés par un dispositif de tête de soudage (16) avec un déplacement par rapport à l'élément de construction (14) au moyen d'un arc électrique avec l'élément de construction (14), **caractérisé par** les étapes suivantes consistant à :
- surveiller le système (10) en attendant une instruction d'arrêt (124),
- déterminer (126) si l'instruction d'arrêt (124) est une instruction ARRET DE MARCHE ne devant immobiliser qu'une partie du système (10),
- s'il s'agit d'une instruction ARRET DE MARCHE, temporiser (136) un dispositif d'alimentation en puissance (38) pour le dispositif de tête de soudage (16) et un dispositif de commande d'avance (52) pour commander l'amenée d'éléments (12) et le déplacement d'un élément (12) par rapport à l'élément de construction (14), et au moins bloquer ensuite les tensions de sortie du dispositif d'alimentation en puissance (38) et du dispositif de commande d'avance (52),
- surveiller (142) si un commutateur (116) protégé contre une activation non autorisée délivre un signal de commutation pour un mode de fonctionnement COMMANDE MANUELLE,
- surveiller si un bouton-poussoir d'autorisation (34) délivre un signal de contact,
- si le signal pour une COMMANDE MANUELLE est reçu et le signal de contact du bouton-poussoir d'autorisation (34) est reçu, libérer certaines fonctions du système de soudage (10) tout en bloquant la tension de sortie du dispositif d'alimentation en puissance (38).
